Europäisches Patentamt

European Patent Office

Office européen des brevets

(19)

(11) Publication number: **0 286 058**
**A2**

## (12) EUROPEAN PATENT APPLICATION

(21) Application number: 88105411.8

(22) Date of filing: 05.04.88

(51) Int. Cl.⁴: **B29C 67/14** , **B32B 27/00** ,
//B29L31:30

(30) Priority: 08.04.87 IT 6728887

(43) Date of publication of application:
**12.10.88 Bulletin 88/41**

(84) Designated Contracting States:
**DE ES FR GB SE**

(71) Applicant: **FERRARI ENGINEERING S.p.A.**
**Strada Scaglia Est 15 Direzionale Modena 2**
**I-41100 Modena(IT)**

Applicant: **N.C.O. S.r.l.**
**Via per San Felice, 28**
**I-41031 Camposanto(IT)**

(72) Inventor: **Forghieri Mauro**
**Via Fossa 55**
**It-41010 Magreta(IT)**
Inventor: **Manfredini Enrico**
**Via Nazionale 31**
**IT-41030 Sorbara di Bomporto(IT)**

(74) Representative: **Prato, Roberto et al**
**c/o Ingg. Carlo e Mario Torta Via Viotti 9**
**I-10121 Torino(IT)**

(54) **Composite load-bearing structural element and relative manufacturing process.**

(57) A composite structural element for vehicle bodies, consisting of a panel (1) of any shape formed by combining into a monolithic whole a matrix (2) formed from polyurethane resin foam, and a three-dimensional armature (3) formed from a first and second layer (4, 5) of vegetable, mineral or synthetic fibres arranged beneath respective surfaces (9, 10) defining the aforementioned panel, and an intermediate spacer element (8) inserted between and separating the aforementioned fibre layers (4, 5) and formed from a permeable, flexible mattress presenting a void percentage of at least 90%.

Fig.1

EP 0 286 058 A2

## COMPOSITE LOAD-BEARING STRUCTURAL ELEMENT AND RELATIVE MANUFACTURING PROCESS

The present invention relates to a composite load-bearing structural element, particularly suitable for vehicle bodies or any application requiring relatively large, self-supporting panels with a high strength/weight ratio. The present invention also relates to a process enabling manufacture of such a load-bearing element on an industrial scale.

Numerous applications, particularly in the car and industrial vehicle industry, are known to require substitute materials for sheet steel and aluminium, which, in addition to presenting good mechanical strength, are also lightweight per unit of volume. The present state of the art substantially provides for two types of material catering to this requirement: hot-formed thermoplastic resin panels, usually reinforced with glass or carbon fibre; and so-called "sandwich" panels consisting of two layers of "facings" of fabric impregnated with heat-set ting resins and separated by an intermediate element or "core" usually consisting of a honeycomb aluminium sheet structure or numerous strips of fabric glued together and impregnated with heat-setting resin which is subsequently oven-cured. Whereas the first type is easy to produce, relatively cheap, and presents an excellent surface finish, the second is expensive, painstaking and time-consuming to produce, presents a poor surface finish, and cannot be formed easily into complex shapes. On the other hand, the first type presents an extremely high specific weight in relation to is mechanical strength, thus limiting employment to a small number of applications, such as the formation of roof panels. Whereas the second type presents an ideal weight/strength ratio, the aforementioned drawbacks substantially prevent it from being used in the automotive or mass-production industries in general; application being restricted to industries, such as the aircraft industry, allowing a fair amount of craftsmanship.

The aim of the present invention is to provide a self-supporting composite element which combines the low-cost, troublefree production and good surface finish of thermoplastic resin panels with a good strength/weight ratio comparable with that of "sandwich" panels formed from heat-setting material. A further aim of the present invention is to provide a troublefree, fast process of manufacturing the said elements on an industrial scale. With these aims in view, according to the present invention, there is provided a load-bearing structural element, particularly for vehicle bodies, comprising a synthetic plastic resin matrix and a strengthener consisting of fibres immersed inside the said matrix and designed to absorb mechanical stress; characterised by the fact that the said fibre strengthener is divided into at least two substantially uniform layers arranged beneath respective opposite outer surfaces defining the said structural element; the said structural element comprising a permeable inner spacer element having a high void percentage and arranged between the said layers of fibers in such a manner as to separate the same as far as possible from each other; the said matrix being formed from polymeric foam, by which the said inner spacer element is fully permeated and inside which the said inner spacer element is immersed together with the said fibres, so as to form a monolithic whole.

According to the present invention, there is also provided a process for manufacturing load-bearing structural elements, particularly vehicle body panels, characterised by the fact that it comprises stages consisting in: - arranging inside a mold a three-dimensional armature formed by combining: a first layer of vegetable, mineral or synthetic fibres of relatively long length in relation to the size of the said layer, and arranged in random, substantially two-dimensional manner, so that the said first layer is relatively thin as compared with its other dimensions; a three-dimensional intermediate element formed from flexible material and substantially equal in thickness to the element being produced, said three-dimensional element being placed on top of the said first fibre layer, and being highly permeable by virtue of most of its volume consisting of a number of communicating voids; and a second layer of vegetable, mineral or synthetic fibres substantially identical to the said first layer and which is placed on top of the said three-dimensional element in such a manner as to be supported by the same and separated from the said first layer; - injecting inside the said mold, when closed a polymeric foam produced by forming gas bubbles inside a mass of polyurethane resin in the process of curing; said foam being injected in such a manner as to fill all the voids inside the said mold and fully permeate the said three-dimensional armature and incorporate the same, within a predetermined time period, into a solid polyurethane foam resin matrix.

A non-limiting embodiment of the load-bearing element according to the present invention will be described by way of example with reference to the accompanying drawings in which :

Fig.1 shows a purely schematic cross section of a panel formed according to the teachings of the present invention and housed inside a mold shown only partially, for the sake of simplicity;

Fig. 2 shows a schematic cross section of the Fig.1 panel perpendicular to the Fig.1 plane;

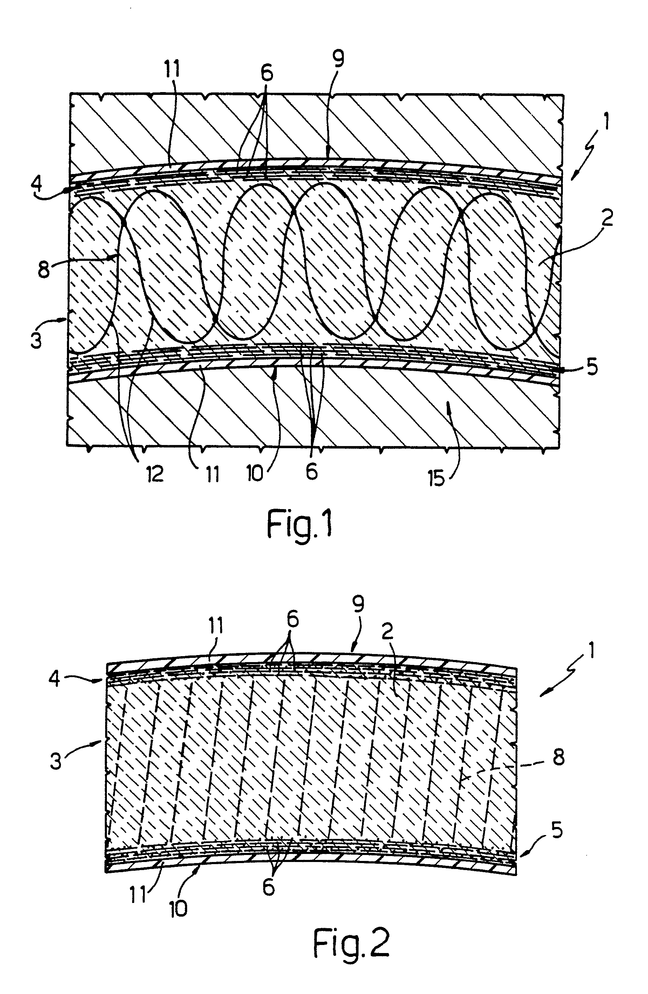

Fig.s 3 to 7 show schematic views of the various stages in the process for producing the Fig.1 and 2 panel.

Number 1 in Fig.s 1 and 2 indicates a composite self-supporting panel, which may be produced in any shape and is particularly suitable for use as a vehicle body panel. According to the present invention, the said panel or ele ment 1 comprises a matrix formed from polymeric foam 2, preferably but not exclusively of the closed-cell type (the open-cell type nevertheless provides for the same efficiency), and a three-dimensional inner armature 3 immersed inside foam 2 so as to form a monolithic whole with the same. Armature 3 consists of two layers, 4 and 5, of any type of fibre 6, e.g. vegetable, mineral or synthetic, which fibres 6 are relatively long as compared with the size of layers 4 and 5, and arranged in random, substantially two-dimensional manner so that the said layers 4 and 5 are relatively thin as compared with their other dimensions; and a permeable, flexible, three-dimensional intermediate element 8 having a high void percentage and inserted between the said layers 4 and 5 so as to define a low-density separating element for separating the said layers 4 and 5 as far as possible and compatibly with the thickness of element 1. Layers 4 and 5 are substantially uniform and, according to the present invention, are arranged beneath respective opposite outer surfaces 9 and 10 defining element 1. The example shown being a panel, the said surfaces 9 and 10, which may be curved or flat, present plan dimensions far in excess of the distance separating them, which distance obviously equals the thickness of panel or element 1. According to the present invention, each of the said surfaces 9 and 10, or at least the visible surface on the structure formed using element 1, is preferably defined, not by the matrix resin, but by a respective surface finish layer 11 commonly known as "gel coat" and consisting of a compact synthetic resin coated over synthetic foam matrix 2.

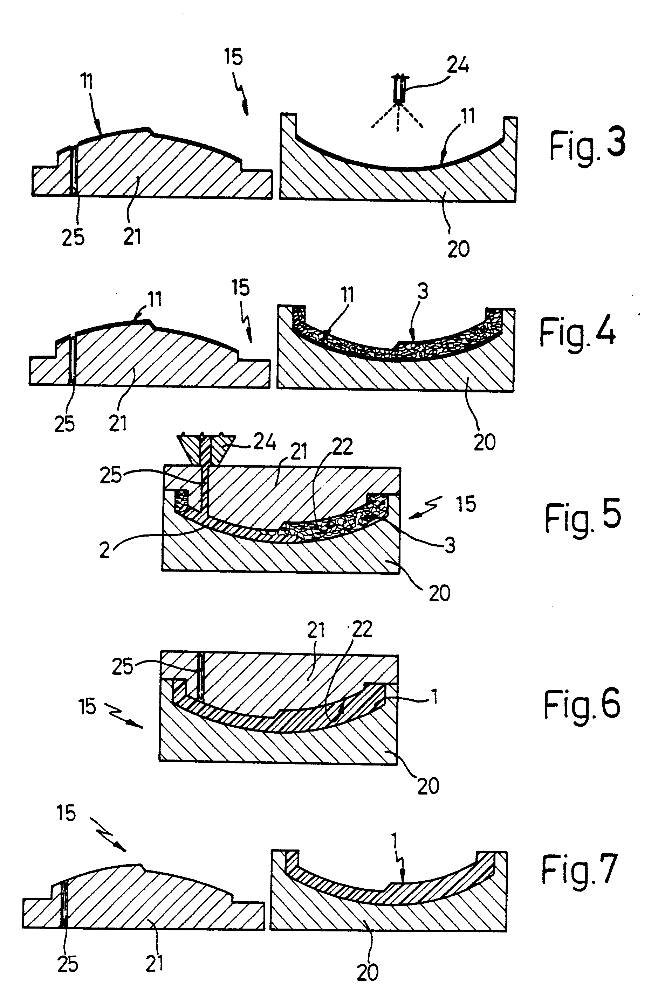

Intermediate element 8 is placed on top of bottom layer 5 and, in turn, supports top layer 4 on the opposite side to layer 5. The fibres 6 of layers 4 and 5 are totally immersed inside matrix 2 and provide for absorbing mechanical stress by virtue of the position in which they are held by element 8. As all the voids inside element 8 are permeated by the solid foam constituting matrix 2, the said element 8 is also immersed inside matrix 2 together with fibres 6. According to the present invention, element 8 consists of a flexible, porous mattress, at least 90% of the volume of which consists of communicating voids. According to the preferred embodiment shown, element 8 consists of a flexible ENKAMAT mattress (registered trade mark) formed from a number of monofilaments 12 of polyamide fibre, preferably POLIAMIDE 6, roughly interwoven in accordion fashion (as shown purely schematically in Fig.1 with no claim to realism) and heat sealed at the contact points. Though such an element is known and marketed in rolls which may be cut to size, it is generally employed in a different field of technology, for protecting grass-covered surfaces, slopes, banks and similar. For the manufacture of composite panels, the said element is used herein for the first time, according to a basic characteristic of the present invention. In conjunction with the said element 8, layers 4 and 5 are also formed using glass fibre, preferably a"Unifilo" mat consisting of uncut monofilaments of E glass of relatively long length as compared with the size of layers 4 and 5 and held together by means of a styrene soluble plastic binder. The said mat is also a known material available on the market, the one employed in the preferred embodiment of the present invention being marketed by the name of UNIFILO (registered trade mark). In conjunction with the above materials, the formation of matrix 2 surprisingly requires the use of polyurethane resins foamed using agents designed to produce gaseous substances during curing of the resin, e.g. water, freon or chlorofluoridated hydrocarbons. Experiments conducted by the present Applicants have shown that any type of polyurethane foam may be employed as a matrix for the panel according to the present invention. To any technician skilled in the art, therefore, it will be clear that matrix 2 may be formed by simply mixing the components of any known polyurethane system, which here and hereinafter is intended to mean the formulated reactants marketed by various manufacturers or otherwise obtainable on the market by technicians skilled in the art, and subsequently inserting the said components inside a mold. Tests have also shown that mattress 8 may be formed from any material, other than polyamide fibres, providing it presents characteristics similar to those described, i.e. a void percentage of 90% or over (preferably 95%) of its total volume, a component fibre density of approximately 1-1.15 Kg per cubic decimetre, and chemical compatability with the polyurethane systems employed, with no reduction in performance as regards the aims of the present invention. To any technician skilled in the art, therefore, it will be clear that element 8 may also be formed from rubber-coated coco fibres, filter material fibres, particularly in the form of a woven mat (here and hereinafter intended to mean a struc ture of fibres interwoven in any manner), and polyurethane foam sponge, providing it is of the open-cell type. By way of an alternative to the glass fibre Unifilo mat, layers 4 and 5 may also be formed from glass fibre fabric, woven glass or carbon fibre mats, or non-woven fabrics. According to the present invention, armature 3 is formed from the above materials by placing inside a mold 15 (Fig.1) of any known type (and therefore not described in detail, for the sake of simplicity) a given amount of glass fibre Unifilo mat to form layer 5; a length of ENKAMAT mattress (registered trade mark) cut to the size of the required panel 1 and, in particular, of substantially the same thickness as the same; and, finally, a further amount of Unifilo mat to form layer 4. As shown clearly in Fig.s 3 to 7, mold 15 is composed of a bottom mold 20 and a top mold 21 having respective conjugate surfaces, so as to define, when mold 15 is closed. i.e. when top mold 21 is placed on top of bottom mold 20 with their respective conjugate surfaces facing each other (Fig.6), an inner cavity 22 of exactly the same shape and size as panel 1 being produced. With top and bottom molds 21 and 20 open and placed side by side, the inner wall of mold 20 (and possibly also the respective conjugate surface of mold 21) is first coated with gel coat, i.e. a layer of isophthalic polyester resin (Fig.3) to which is added 2% by weight of organic peroxide, to produce one or both of layers 11. The said resin coating is preferably sprayed on, during curing, by means of a nozzle 24 which is moved over the surfaces of top and bottom molds 21 and 20. Prior to spraying, the said surfaces are preferably treated with remover or a non-adhesive substance, such as wax, for enabling easy removal of the finished product. Armature 3 is then placed inside bottom mold 20, for which purpose it may either be preassembled separately and held together by appropriate means (ties, adhesives or similar) and placed enbloc inside bottom mold 20, or it may be built in loco by placing layer 5, porous spacer 8 and layer 4 on top of one another inside bottom mold 20. Mold 15 is then closed by placing top mold 21 on top of bottom mold 20 with their respective conjugate surfaces facing each other, and the resulting inner cavity 22 housing armature 3 is injected with polyurethane foam 2 (Fig.5). The said foam 2 is produced separately in known manner, using known metering and mixing equipment (not shown), by adding water, freon or other foaming agent to a reacting mixture of formulated polydydric alcohols and isocyanates, which is injected via nozzle 24 and a respective channel 25 formed through top mold 21. Subsequent to injection (Fig. 6), polyurethane foam 2 is allowed to settle in closed mold 15 for approximately 4-6 minutes, to enable it to fully permeate armature 3, to fill all the voids in cavity 22, both inside and outside armature 3, and to solidify by curing. Finally (Fig.7), mold 15 is opened and the finished panel 1 removed, said panel 1 consisting of solid polyurethane foam incorporating armature 3 and finish layers 11. The process according to the present invention will now be described by way of a number of non-limiting examples.

## EXAMPLE 1

A steel mold was prepared having male and female elements in the form of a 500x500x5 mm flat sheet. After heating the entire mold to 45°C and waxing the inside surface, the bottom mold was sprayed with a ~0.2 mm thick layer of SNIAGEL 607 0011.A isophthalic polyester resin, or gel coat, having a Brookfield HTB viscosity at 25°C H2 and 10 RPM of 5400 cps, and activated with methyl ethyl ketone. After about 5 minutes, and after making sure the said gel coat layer was fully cured, a first sheet of 0.4 mm thick, 350 gr/m3 glass fibre Unifilo mat was placed on top of the said layer. A length of 5 mm thick ENKAMAT mattress cut to size was then placed on top of the said first sheet of Unifilo mat and, finally, a second sheet of Unifilo mat was placed on top of the said ENKAMAT mattress. Having formed the said structure, the mold was closed to a pressure of 3 Kg/cm2 and injected with 0.6 Kg of polyurethane foam having a free density of 100 Kg/m3. The said foam was produced during injection by mixing, on a CANNON H40 metering and mixing machine, 0.25 Kg of BAYER PA50 isocyanate and 0.25 Kg of DOW CHEMICALS Sistema n.3032 formulated polyhydric alcohol. The mold was left closed for 5 minutes after injecting the said polyurethane foam, after which it was opened and the finished panel removed, said panel consisting of a composite structure consisting of a 500x500x5 mm sheet of cured, solidified, closed-cell foam incorporating the said two sheets of Unifilo mat and the separating mattress on the inside, and the gel coat layer on the outside. The separating mattress was reduced to a thickness of approximately 3.7 mm. When tested, the said sheet presented a density of 580 Kg/m3 and a weight of 2.90 Kg/m2. The said sheet also presented, to the naked eye, a satisfactory surface finish on the gel coated side, and was satisfactory in terms of strength.

## EXAMPLE 2

A number of flat panels were prepared as in Example 1, but varying the aforementioned parameters for each, in particular, the foaming agent and armature materials. The results were as shown in Table 1.

4

## TABLE 1

| Sample | Foam.Ag. | Armature Material | Finish Wt |
| --- | --- | --- | --- |
| 1 | Freon 11 | Glass fibre mat ENKAMAT mattress | 2.90 Kg/m2 |
| 2 | Freon 113 | " " | 2.91 " |
| 3 | Water + Freon 11 | " " | 2.90 " |
| 4 | Water | Woven glass mat ENKAMAT mattress | 3.00 " |
| 5 | Water | Non-woven fabric Polyurethane mattress | 3.40 " |
| 6 | Freon 11 | Glass fibre mat Woven coco+rubber fibre mat | 3.11 " |

--→ (Possible Example 3 using different isocyanate and polyhydric alcohol foams)

### Claims

1) - A load-bearing structural element (1), particularly for vehicle bodies, comprising a synthetic plastic resin matrix and a strengthener consisting of fibres immersed inside the said matrix and designed to absorb mechanical stress; characterised by the fact that the said fibre strengthener is divided into at least two substantially uniform layers (4, 5) arranged beneath respective opposite outer surfaces (9, 10) defining the said structural element (1); the said structural element 1) comprising a permeable inner spacer element (8) having a high void percentage and arranged between the said layers (4, 5) of fibres (6) in such a manner as to separate the same as far as possible from each other; the said matrix being formed from polymeric foam (2), by which the said inner spacer element (8) is fully permeated and inside which the said inner spacer element (8) is immersed together with the said fibres (6), so as to form a monolithic whole.

2) - A structural element (1) as claimed in Claim 1, characterised by the fact that the said inner spacer element consists of a flexible mattress (8) at least 90% of the total volume of which consists of communicating voids, whereas the said strengthener consists of two layers (4, 5) of glass fibre Unifilo mat.

3) - A structural element (1) as claimed in Claim 1 or 2, characterised by the fact that it consists of a two-dimensional panel-shaped element defined by a pair of surfaces (9, 10) having plan dimensions far in excess of the distance between them; the said fibres (6) being arranged in uniform layers (4, 5) beneath the said surfaces (9, 10); and at least one of the said surfaces (9, 10) being defined by a layer of compact synthetic resin (11) over the said synthetic polymeric foam matrix.

4) - A process for manufacturing load-bearing structural elements, particularly for vehicle body panels, characterised by the fact that it comprises stages consisting in:
- arranging inside a mold (15) a three-dimensional armature (3) formed by combining: a first layer (5) of vegetable, mineral or synthetic fibres of relatively long length in relation to the size of the said layer, and arranged in random, substantially two-dimensional manner, so that the said first layer is relatively thin as compared with its other dimensions; a three-dimensional intermediate element (8) formed from flexible material and substantially equal in thickness to the element being produced, said three-dimensional element placed on top of the said first fibre layer (5), and being highly permeable by virtue of most of its volume consisting of a number of communicating voids; and a second layer (4) of vegetable, mineral or synthetic fibres substantially identical to the said first layer (5) and which is placed on top of the said three-dimensional element (8) in such a manner as to be supported by the same and separated from the said first layer;

- injecting inside the said mold (15), when closed, a polymeric foam (2) produced by forming gas bubbles inside a mass of polyurethane resin in the process of curing; said foam being injected in such a manner as to fill all the voids inside the said mold (15) and fully permeate the said three-dimensional armature (8) and incorporate the same, within a predetermined time period, into a solid polyurethane foam resin matrix.

5) - A process as claimed in Claim 4, characterised by the fact that the said three-dimensional armature (3) is formed by inserting, between the said two layers (4, 5) of vegetable, mineral or synthetic fibres, a flexible mattress (8) formed in such a manner that at least 90% of its total volume consists of communicating voids; the said mattress (8) being formed from one of a group of materials consisting of : monofilaments of polyamide fibre heat sealed at the contacting points of the same; rubber-coated coco fibres: open-cell polyurethane foam sponge; and filter material fibres.

6) - A process as claimed in Claim 5, characterised by the fact that the said three-dimensional armature (3) is formed by inserting, between the said two layers (4, 5) of vegetable, mineral or synthetic fibres, a flexible mattress (8) of the type employed for protecting grass-covered surfaces, slopes, banks or similar.

7) - A process as claimed in Claim 6, characterised by the fact that the said three-dimensional armature (3) is formed by inserting, between the said two layers (4, 5) of vegetable, mineral or synthetic fibres, a flexible ENKAMAT mattress (8) (registered trade mark).

8) - A process as claimed in one of the foregoing Claims from 4 to 7, characterised by the fact that the said first and second layers of fibres (6) are formed from one of a group of materials consisting of: glass fibre Unifilo mat; glass fibre fabrics; woven glass fibre mats; non-woven fabrics.

9) - A process as claimed in one of the foregoing Claims from 4 to 8, characterised by the fact that, prior to injecting the said polyurethane foam into the said mold, at least one inner wall of the said mold is coated with a relatively thin layer (11) of isophthalic polyester resin (gel coat) having a Brookfield HTB viscosity ranging from 5000 to 5800 cps at 25°C H2 and 10 RPM and a gel time at 25°C of maximum 11 minutes; one of the said layers (4, 5) of vegetable, mineral or synthetic fibres subsequently being placed in contact with the said layer (11), on the opposite side to that contacting the said three-dimensional intermediate element (8).

Fig.1

Fig.2

Fig. 3

Fig. 4

Fig. 5

Fig. 6

Fig. 7